# EUROPEAN PATENT APPLICATION

(11) **EP 3 806 441 A1**
(43) Date of publication of application: **14.04.2021**
(21) Application number: 19810547.0
(22) Date of filing: 29.03.2019
(51) Int. Cl.: H04N 5/225, B08B 3/02, B60S 1/60, G02B 7/02, G03B 15/00, G03B 17/02

(54) **CLEANING DEVICE**

(30) Priority: 01.06.2018 JP 2018105785
(71) Applicant: Clarion Co., Ltd., Saitama-shi, Saitama 330-0081 (JP)
(72) Inventor: SATO, Katsuhisa, Saitama-Shi, Saitama 330-0081 (JP)
(74) Representative: J A Kemp LLP
(86) International application number: PCT/JP2019/014061
(87) International publication number: WO 2019/230180

(57) **Abstract**

This cleaning device for cleaning a lens of a camera is provided with: a pipe; a member having a flow path connected to the pipe and having a discharge port through which a fluid flowing from the pipe into the flow path is discharged toward the lens: and a drive unit that, while the fluid is discharged through the discharge port changes the position at which the fluid is sprayed onto the lens, by moving the member with respect to the lens in a state in which the discharge port is directed to the lens.

## Description

### TECHNICAL FIELD

The present invention relates to cleaning devices.

### BACKGROUND ART

There has been known a vehicle-mounted camera that photographs surroundings (front, side and/or rear) of a vehicle. This type of vehicle-mounted camera is mounted with at least a lens portion exposed on the outside of a body of a vehicle to photograph surroundings of the vehicle. Therefore, there are cases where foreign substances such as water droplet, mud and dust adhere to the lens depending on weather or state of outside air. If foreign substances adhere to the lens, the foreign substances will be imaged on an image photographed by the vehicle-mounted camera and thus it becomes difficult to clearly photograph surroundings of the vehicle.

For example, Japanese Patent No. 6090319 (hereinafter referred to as "Patent Document 1") discloses a cleaning device that cleans a lens of a vehicle-mounted camera. The cleaning device disclosed in Patent Document 1 is configured to remove foreign substances adhered to the lens by spraying misty cleaning liquid to the lens from a nozzle installed outside of an angle of view of the vehicle-mounted camera (above the lens).

### SUMMARY OF THE INVENTION

In the configuration disclosed in Patent Document 1, since the nozzle is installed above the lens, there is for example a problem that it is hard to spray cleaning liquid on a lower area of the lens and thus it is difficult to remove foreign substances adhered to such area.

The present invention is made in view of the foregoing circumstance, and the object of the present invention is to provide a cleaning device that is capable to reduce the area on the lens from which foreign substances are hard to remove (in other words, a cleaning device that is capable to spray cleaning liquid over a wider area on the lens) as compared to the conventional configuration illustrated in Patent Document 1.

A cleaning device according to an embodiment of the present invention is a device configured to clean a lens of a camera and includes a piping, a member having a flow path connected to the piping and a discharge outlet configured to discharge fluid flowed from the piping into the flow path toward the lens, and a drive part configured to change a position on the lens where the fluid is sprayed by moving the above-described member with respect to the lens with the discharge outlet facing the lens while the fluid is discharged from the discharge outlet.

According to the cleaning device configured as above, since the cleaning liquid is sprayed on the lens while moving the above-mentioned member with respect to the lens, it is possible to spray cleaning liquid over a wide area on the lens. Therefore, the area on the lens from which foreign substances are hard to remove can be reduced and it becomes possible to remove foreign substances on the lens more successfully.

The above-described member is, for example, disposed outside of an angle of view of the camera. In this case, the drive part causes the above-described member to move from outside of the angle of view to inside of the angle of view of the camera and causes the above-described member to move within the angle of view with the discharge outlet facing the lens while the fluid is discharged from the discharge outlet.

the above-described member may be an arm-shaped member to which the discharge outlet is provided at a distal end, and may be supported to be rotatable about a support at a base end portion of the arm-shaped member with respect to the camera. In this case, the drive part causes the member to rotate about the support while the fluid is discharged from the discharge outlet. The above-described member moves from outside of the angle of view to inside of the angle of view and moves within the angle of view while maintaining a posture in which the discharge outlet is facing the lens by rotating about the support.

the drive part may have a cylinder, a piston configured to move within the cylinder, and a transmission part configured to transmit motion of the piston to the above-described member. In this case, the above-described member rotates about the support by the motion of the piston transmitted by the transmission part.

The above-described member may be supported by a support body supporting the camera, have a detachably attached pin, rotate about the support as the motion of the piston is transmitted to the pin via the transmission part, and become detachable from the support body by detaching the pin.

The flow path of the above-described member may include a compressed air flow path connected to a first piping configured to supply compressed air and a cleaning liquid flow path connected to a second piping configured to supply cleaning liquid, an outlet of the compressed air flow path and an outlet of the cleaning liquid flow path being disposed close to each other near the discharge outlet such that the cleaning liquid is sucked out from the outlet of the cleaning liquid flow path and discharged from the discharge outlet along with the compressed air by generating negative pressure around the outlet of the compressed air flow path by the compressed air sprayed from the outlet of the compressed air flow path.

The cleaning device according to an embodiment of the present invention may include a pump configured to supply the compressed air to both the cylinder and the first piping. In this case, as the compressed air is supplied to both the cylinder and the first piping by the pump, the piston moves due to the compressed air supplied to the cylinder, the above-described member rotates about the support due to the transmission of the motion of the piston to the member by the transmission part, and, during the rotation of the member, the compressed air supplied from the first piping to the compressed air flow path is sprayed from the outlet of the compressed air flow path and the cleaning liquid is discharged from the discharge outlet along with the compressed air.

A communication port of the above-described member configured to make the piping and the flow path communicate with each other may be disposed coaxially with the above-described support. More specifically, among a communication port configured to make the first piping and the compressed air flow path communicate with each other and a communication port configured to make the second piping and the cleaning liquid flow path communicate with each other, the former communication port may be disposed coaxially with the above-described support.

According to an embodiment of the present invention, there is provided a cleaning device that is capable to reduce the area on the lens from which foreign substances are hard to remove as compared to conventional cleaning devices.

### BRIEF DESCRIPTION OF THE DRAWINGS

[Fig. 1] Fig. 1 is a perspective view of a vehicle-mounted camera and a cleaning device installed to the vehicle-mounted camera according to an embodiment of the present invention.
[Fig. 2] Fig. 2 is an exploded perspective view of the vehicle-mounted camera and the cleaning device according to the embodiment of the present invention.
[Fig. 3] Fig. 3 is a perspective view of the vehicle-mounted camera and the cleaning device according to the embodiment of the present invention with some components (mainly an arm-shaped member provided to the cleaning device) being shown with a cross-sectional view.
[Fig. 4] Fig. 4 is a perspective view of the vehicle-mounted camera and the cleaning device in a state where, in the embodiment of the present invention, the arm-shaped member rotated from an original position (Fig. 1) in a direction of an arrow D (Fig. 2).
[Fig. 5] Fig. 5 is a perspective view of a vehicle-mounted camera and a cleaning device according to a variation of the embodiment of the present invention.
[Fig. 6] Fig. 6 is an exploded perspective view of the vehicle-mounted camera and the cleaning device according to the variation of the embodiment of the present invention.
[Fig. 7A] Fig. 7A is a side view of an arm-shaped member according to the variation of the embodiment of the present invention.
[Fig. 7B] Fig. 7B is a cross-sectional view of the arm-shaped member cut at a line A-A shown in Fig. 7A.
[Fig. 7C] Fig. 7C is a perspective view a release pin according to the variation of the embodiment of the present invention when viewed from a lock part side.
[Fig. 7D] Fig. 7D is a diagram showing a state where a pin main body part of the release pin according to the variation of the embodiment of the present invention is pulled out of the lock part.

### EMBODIMENTS FOR CARRYING OUT THE INVENTION

Hereinafter, a cleaning device according to an embodiment of the present invention attached to a vehicle-mounted camera will be described with reference to the drawings.

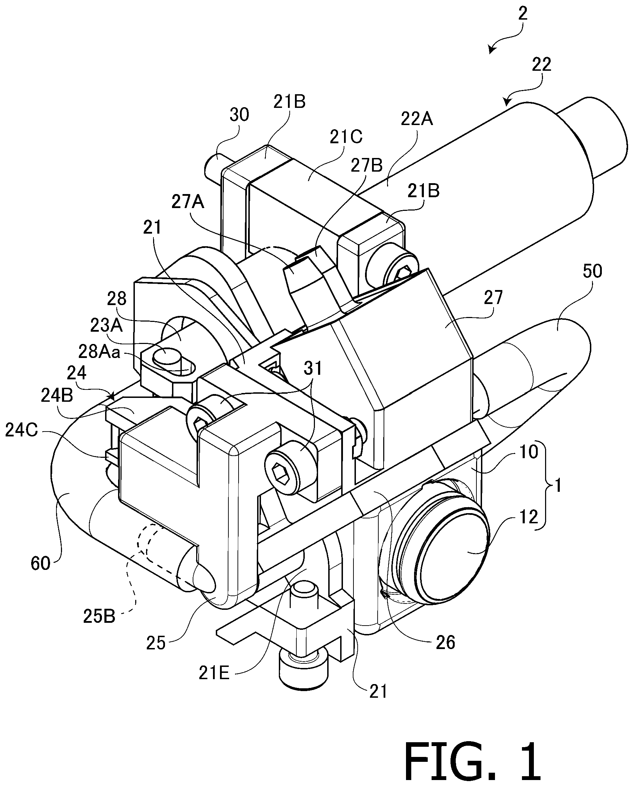

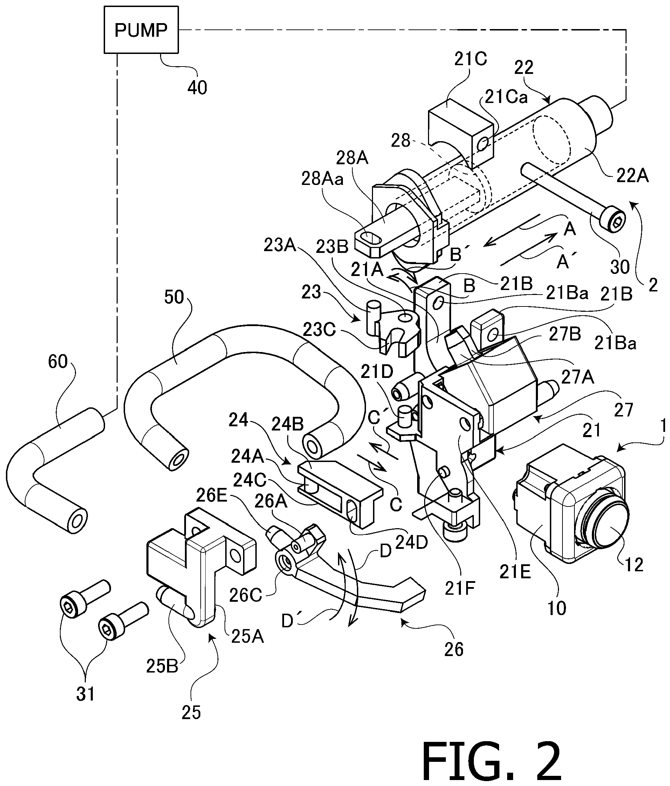

Fig. 1 is a perspective view of a vehicle-mounted camera 1 and a cleaning device 2 installed to the vehicle-mounted camera 1 according to an embodiment of the present invention. Fig. 2 is an exploded perspective view of the vehicle-mounted camera 1 and the cleaning device 2. As shown in Figs. 1 and 2, the vehicle-mounted camera 1 includes a camera body 10 and a lens 12. For example, the cleaning device 2 cleans the lens 12 at constant timings or at a timing when a predetermined trigger occurs (at a timing when imaging of foreign substances is detected through image analysis or the like or at a timing when a user's operation for instructing cleaning is performed).

The cleaning device 2 includes a support body 21, a cylinder 22, a cam member 23, a link member 24, a holding member 25, an arm-shaped member 26, a tank 27, a pump 40, a cleaning liquid piping 50 and a compressed air piping 60. The vehicle-mounted camera 1 is fixed to the support body 21 with not-shown screws.

A cylinder receiving surface 21A is formed to an upper end portion of the support body 21. Pillar-shaped members 21B are provided upright on both sides of the cylinder receiving surface 21A.

The cylinder 22 is disposed with a portion of an outer periphery 22A received by the cylinder receiving surface 21A. At a position opposing the cylinder receiving surface 21A across the cylinder 22, a cylinder holding member 21C that holds the cylinder 22 is disposed.

To each of the pillar-shaped members 21B and the cylinder holding member 21C, a screw hole 21Ba and a screw hole Ca are respectively formed. The cylinder holding member 21C is fixed between a pair of pillar-shaped members 21B by inserting and screwing a screw 30 into the screw hole 21Ba of one of the pair of pillar-shaped members 21B, the screw hole 21Ca of the cylinder holding member 21C and the screw hole 21Ba of the other of the pair of pillar-shaped members 21B. The cylinder 22 is supported by the support body 21 by a portion of the outer periphery 22A being nipped between the cylinder holding member 21C fixed to the pillar-shaped members 21B and the cylinder receiving surface 21A.

A piston 28 is provided inside the cylinder 22. A distal end portion of the piston 28 (hereinafter referred to as a "rod 28A" for the sake of convenience) is exposed from the cylinder 22. A long hole 28Aa is formed to the rod 28A. A pin 23A formed to the cam member 23 is inserted to the long hole 28A.

A shaft part 21D is formed to the support body 21. A shaft hole 23B is formed to the cam member 23. The shaft part 21D of the support body 21 is inserted to the shaft hole 23B of the cam member 23. The cam member 23 is thereby supported to be rotatable with respect to the support body 21 about the shaft part 21D.

The piston 28 is biased in a direction of an arrow A' (Fig. 2) by a not-shown spring member. The pump 40 is connected to the cylinder 22. As compressed air is supplied from the pump 40 to the cylinder 22, the piston 28 slides within the cylinder 22 in a direction of an arrow A (Fig. 2) opposite to the direction of the arrow A' against the urging force of the spring member by a differential pressure that occurs within the cylinder 22.

As the piston 28 slides in the direction of the arrow A (Fig. 2), the sliding movement of the piston 28 is transmitted to the pin 23A of the cam member 23 via the long hole 28A of the rod 28A. The cam member 23 thereby rotates about the shaft part 21D in a direction of an arrow B (Fig. 2).

The link member 24 has a pair of plate-like members (an upper plate part 24B and a lower plate part 24C) disposed parallel to each other with a predetermined interval therebetween. A cylindrical part 24A is provided upright between the upper plate part 24B and the lower plate part 24C. A cutout part 23C formed to the cam member 23 engages with the cylindrical part 24A. An upward movement of the link member 24 with respect to the cam member 23 is restricted by the lower plate part 24C abutting the cam member 23 (the cutout part 23C), and a downward movement of the link member 24 with respect to the cam member 23 is restricted by the upper plate part 24B abutting the cam member 23 (the cutout part 23C).

The holding member 25 is fastened to a side surface 21E of the support body 21 by screws 31. The link member 24 is loosely nipped between the side surface 21E of the support body 21 and the holding member 25 fastened to the side surface 21E. As the cam member 23 rotates about the shaft part 21D of the support body 21 in the direction of the arrow B (Fig. 2), the rotation of the cam member 23 is transmitted to the cylindrical part 24A of the link member 24 via the cutout part 23C. The link member 24 thereby slides between the side surface 21E of the support body 21 and the holding member 25 in a direction of an arow C (Fig. 2).

A long hole 24D is formed to the link member 24. A pin 26A formed to a base end portion of the arm-shaped member 26 is inserted to the long hole 24D of the link member 24.

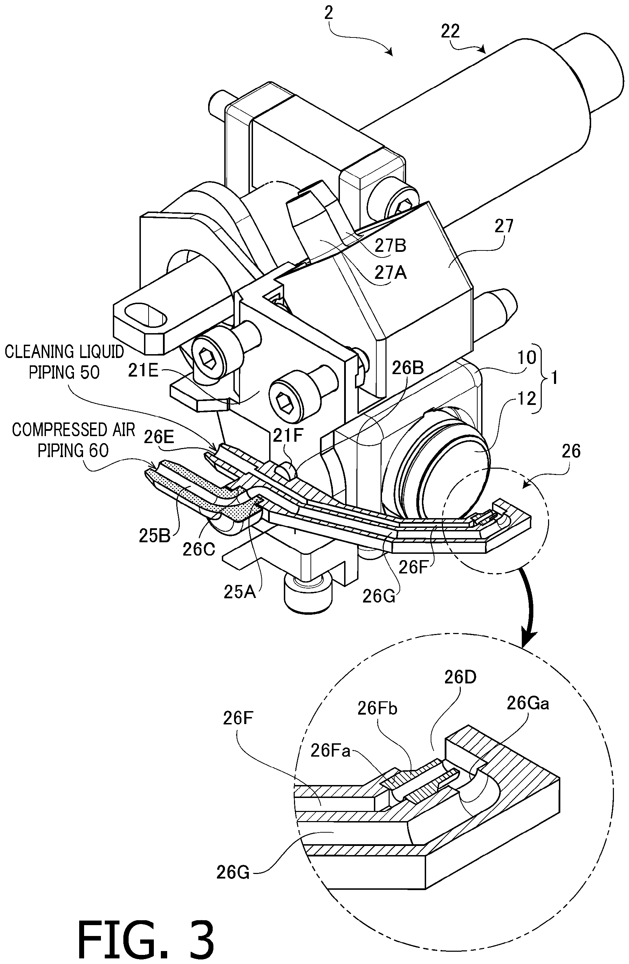

Fig. 3 is a perspective view of the vehicle-mounted camera 1 and the cleaning device 2. In Fig. 3, for the sake of convenience, some components (mainly the arm-shaped member 26) are shown with a cross-sectional view. A cross section of the arm-shaped member 26 is hatched but cross sections of the other member (specifically, a compressed air flow path 25B (described later) of the holding member 25) is toned in order to clearly show that it is a cross section of a member other than the arm-shaped member 26. Recessed parts 26B and 26C having circular cross sections are formed to the base end portion of the arm-shaped member 26. The recessed part 26B and the recessed part 26C are formed along the same axis.

A short shaft part 21F formed to the side surface 21E of the support body 21 is inserted to the recessed part 26B of the arm-shaped member 26. A short shaft part 25A formed to the holding member 25 is inserted to the recessed part 26C of the arm-shaped member 26. The arm-shaped member 26 is loosely nipped between the side surface 21E of the support body 21 and the holding member 25 along with the link member 24 with the pin 26A inserted to the long hole 24D of the link member 24, and is supported to be rotatable with respect to the support body 21 and the holding member 25 about the short shaft part 21F of the support body 21 and the short shaft part 25A of the holding member 25 disposed coaxially with the short shaft part 21F. In other words, the arm-shaped member 26 supported to be rotatable with respect to the vehicle-mounted camera 1 about the short shaft parts 21F and 25A being supports at the base end portion of the arm-shaped member 26.

A distal end portion of the arm-shaped member 26 is initially disposed outside of an angle of view of the vehicle-mounted camera 1 (above the lens 12) so that the distal end portion is not imaged in an image captured by the vehicle-mounted camera 1 (See Fig. 1.). As the link member 24 slides in the direction of the arrow C (Fig. 2), the sliding movement of the link member 24 is transmitted to the pin 26A of the arm-shaped member 26 via the long hole 24D of the link member 24. The arm-shaped member 26 thereby rotates about the short shaft part 21F of the support body 21 and the short shaft part 25A of the holding member 25 disposed coaxially with the short shaft part 21F in the direction of the arrow D (Fig. 2).

As described above, the rod 28A, the cam member 23 and the link member 24 function as a transmission part that transmits motion (sliding movement) of the piston 28 to the arm-shaped member 26.

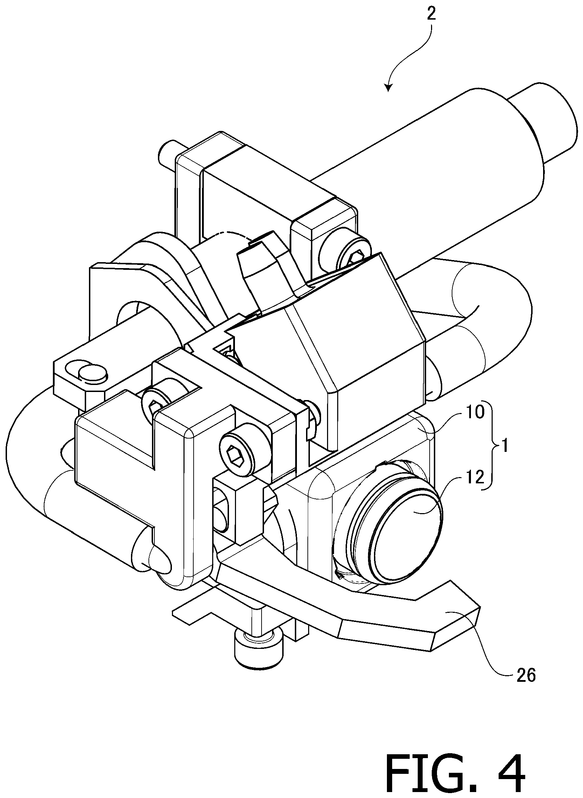

Fig. 4 shows a perspective view of the vehicle-mounted camera 1 and the cleaning device 2 when the arm-shaped member 26 rotated from an initial position (Fig. 1) in the direction of the arrow D (Fig. 2). As the arm-shaped member 26 rotates in the direction of the arrow D (Fig. 2), the distal end portion of the arm-shaped member 26 moves from the initial position (outside of the angle of view of the vehicle-mounted camera 1) to inside of the angle of view of the vehicle-mounted camera 1 and moves within the angle of view toward a lower side of the lens 12.

A discharge outlet 26D that discharges misty cleaning liquid is formed to the distal end portion of the arm-shaped member 26 (See the enlarged view of Fig. 3). A specific mechanism for discharging misty cleaning liquid from the discharge outlet 26D will be described. The cleaning liquid is, for example, washer liquid shared with wipers of the vehicle, dedicated liquid for the vehicle-mounted camera 1, or water.

A tank 27 is attached to the support body 21 with not-shown screws. A piping connecting port 27A is provided on an upper surface of the tank 27. A piping (not shown) provided with a check valve is connected to the piping connecting port 27A. The cleaning liquid is supplied from this piping to the tank 27 via the piping connecting port 27A. In the present embodiment, spilling of the cleaning liquid from the tank 27 is prevented by providing the piping connecting port 27A on the upper surface of the tank 27 (in other words, by providing a vent for the cleaning liquid on the upper side of the tank).

An air vent 27B is provided on the upper surface of the tank 27 as well. A piping (not shown) provided with a check valve is connected to the air vent 27B. Since air (outside air) is taken in the tank 27 through the above-mentioned piping via the air vent 27B as much as the cleaning liquid is ejected from the tank 27, rise in negative pressure inside the tank 27 can be prevented. As an additional remark, due to the function of the check valve provided to the piping connected to the air vent 27B, it is made easier to take in air inside the tank 27 through the air vent 27B and thus the rise in the negative pressure is surely prevented. The configuration for preventing the rise in the negative pressure inside the tank 27 also contributes to the prevention of the spilling of the cleaning liquid from the tank 27.

One end of the cleaning liquid piping 50 configuring a flow path for the cleaning liquid is connected to the tank 27. The other end of the cleaning liquid piping 50 is connected to a connecting port 26E formed to the base end portion of the arm-shaped member 26.

A cleaning liquid flow path 26F is formed inside the arm-shaped member 26. The cleaning liquid flows in the cleaning liquid flow path 26F from the cleaning liquid piping 50 via the connecting port 26E (in other words, the cleaning liquid is supplied to the cleaning liquid flow path 26F). An outlet 26Fa of the cleaning liquid flow path 26F is provided near the discharge outlet 26D of the arm-shaped member 26. A nozzle pin 26Fb having an inner diameter smaller than that of the cleaning liquid flow path 26F is fitted to the outlet 26Fa. The cleaning liquid that flowed from the cleaning liquid piping 50 into the cleaning liquid flow path 26F and reached the nozzle pin 26Fb does not spill out of the nozzle pin 26Fb due to the surface tension effect since a distal end port of the nozzle pin 26Fb is small.

The pump 40 is connected to one end of the compressed air piping 60 as well. The other end of the compressed air piping 60 is connected to a compressed air flow path 25B formed to the holding member 25. A compressed air flow path 26G is formed inside the arm-shaped member 26. The recessed part 26C formed to the arm-shaped member 26 makes the compressed air flow path 25B and the compressed air flow path 26G communicate with each other. In other words, the recessed part 26C is a communication port for making the compressed air piping 60 connected to the compressed air flow path 25B and the compressed air flow path 26G communicate with each other. An outlet 26Ga of the compressed air flow path 26G is provided near the discharge outlet 26D of the arm-shaped member 26 (more specifically, at a position close to the nozzle pin 26Fb of the cleaning liquid flow path 26F).

Compressed air from the pump 40 is supplied to the compressed air flow path 26G via the compressed air piping 60 and the compressed air flow path 25B. The compressed air supplied to the compressed air flow path 26G is sprayed from the outlet 26Ga of the compressed air flow path 26G by raising flow velocity of the compressed air within the compressed air flow path 26G having small diameter. Negative pressure occurs around the outlet 26Ga (atmospheric pressure around the outlet 26Ga decreases) and atmospheric pressure around the nozzle pin 26Fb of the cleaning liquid flow path 26F disposed close to the outlet 26Ga decreases as well by the spraying of the compressed air from the outlet 26Ga of the compressed air flow path 26G. By the decrease in the atmospheric pressure around the nozzle pin 26Fb, a portion of the cleaning liquid staying within the nozzle pin 26Fb is sucked out of the nozzle pin 26Fb. The cleaning liquid sucked out from the nozzle pin 26Fb is discharged from the discharge outlet 26D by the compressed air from the outlet 26Ga (in other words, the cleaning liquid is discharged from the discharge outlet 26D along with the compressed air) and is dispersed and converted into mist in the process of returning from the atmospheric pressure around the nozzle pin 26Fb (decreased atmospheric pressure) to a normal atmospheric pressure.

The discharge outlet 26D of the arm-shaped member 26 is facing the lens 12. Therefore, as the compressed air from the pump 40 is supplied to the cylinder 22 and the compressed air piping 60, the arm-shaped member 26 rotates from the initial position (Fig. 1) in the direction of the arrow D (Fig. 2), and the misty cleaning liquid is discharged from the discharge outlet 26D during this rotation and is sprayed on the lens 12.

The pump 40, the cylinder 22, the piston 28, the cam member 23 and the link member 24 function as a drive part that changes a position on the lens 12 where the cleaning liquid is sprayed by moving the arm-shaped member 26 with respect to the lens 12 with the discharge outlet 26D facing the lens 12 while the cleaning liquid being fluid is discharged from the discharge outlet 26D. In other words, this drive part causes the arm-shaped member 26 to move from outside of the angle of view of the vehicle-mounted camera 1 to inside of the angle of view of the vehicle-mounted camera 1 and causes the arm-shaped member 26 to move within the angle of view toward a lower side of the lens 12 with the discharge outlet 26D facing the lens 12 while the cleaning liquid being fluid is discharged from the discharge outlet 26D. It can also be said that the arm-shaped member 26 moves from outside of the angle of view to inside of the angle of view and moves within the angle of view while maintaining a posture in which the discharge outlet 26D is facing the lens 12 by rotating about the short shaft parts 21F and 25A being supports.

As the supply of the compressed air by the pump 40 stops, the piston 28 slides in the direction of the arrow A' (Fig. 2) by the bias force of the spring member, the cam member 23 rotates in a direction of an arrow B' (Fig. 2) opposite to the direction of the arrow B about the shaft part 21D, the link member 24 slides in a direction of an arrow C' (Fig. 2) opposite to the direction of the arrow C, and the arm-shaped member 26 rotates in a direction of an arrow D' (Fig. 2) opposite to the direction of the arrow D. The arm-shaped member 26 thereby returns to the initial position (Fig. 1). In the meantime, since the spraying of the compressed air from the outlet 26Ga of the compressed air flow path 26G also stops and the atmospheric pressure around the nozzle pin 26Fb reverts to the first, the cleaning liquid does not spill out of the nozzle pin 26Fb due to the surface tension effect. Also, the cleaning liquid does not spill out of the nozzle pin 26Fb because the cleaning liquid is not pushed out of the tank 27 by taking air in the tank 27 through the air vent 27B due to the action of the check valve provided to the piping connected to the air vent 27B.

That is, as the compressed air is supplied by the pump 40, the arm-shaped member 26 rotates in the direction of the arrow D (Fig. 2) while spraying the cleaning liquid to the lens 12. As the supply of the compressed air by the pump 40 stops, the spraying of the cleaning liquid to the lens 12 stops and the arm-shaped member 26 returns to the initial position (Fig. 1).

In the present embodiment, since the cleaning liquid is sprayed to the lens 12 while moving the arm-shaped member 26 (discharge outlet 26D) with respect to the lens 12, it is possible to spray the cleaning liquid over a wider area on the lens as compared to, for example, the conventional configuration illustrated in Patent Document 1. Therefore, the area on the lens from which foreign substances are hard to remove can be reduced and it becomes possible to remove foreign substances on the lens more successfully.

As a complement, in the present embodiment, a rotating range of the arm-shaped member 26 is set such that the cleaning liquid can be sprayed over the entire area of the lens 12.

Also, in the present embodiment, the communication port (the recessed part 26C) that makes the compressed air piping 60 (and the compressed air flow path 25B) and the compressed air flow path 26G communicate with each other is disposed coaxially with the support (a rotation center) of the arm-shaped member 26. Therefore, a load that the arm-shaped member 26 receives from the compressed air piping 60 (and the compressed air flow path 25B) during the rotation is suppressed as compared to a case where the communication port is positioned away from the rotation center of the arm-shaped member 26. In contrast to the cleaning liquid, spilling of the compressed air to outside barely matter. Therefore, a high level of airtightness is not required to the connecting portion between the compressed air flow path 25B and the compressed air flow path 26G.

The foregoing is the description of an illustrative embodiment of the present invention. Embodiments of the present invention are not limited to the one described above, and various modifications are possible within the scope of the technical idea of the present invention. For example, appropriate combinations of embodiments and the like explicitly illustrated in this specification and/or obvious embodiments are also included in the embodiments of this application.

In the above-described embodiment, the cleaning liquid is sprayed to the lens 12. However, in other embodiments, only the compressed air may be sprayed to the lens 12. Even in this case, foreign substances adhered to the lens 12 can be removed.

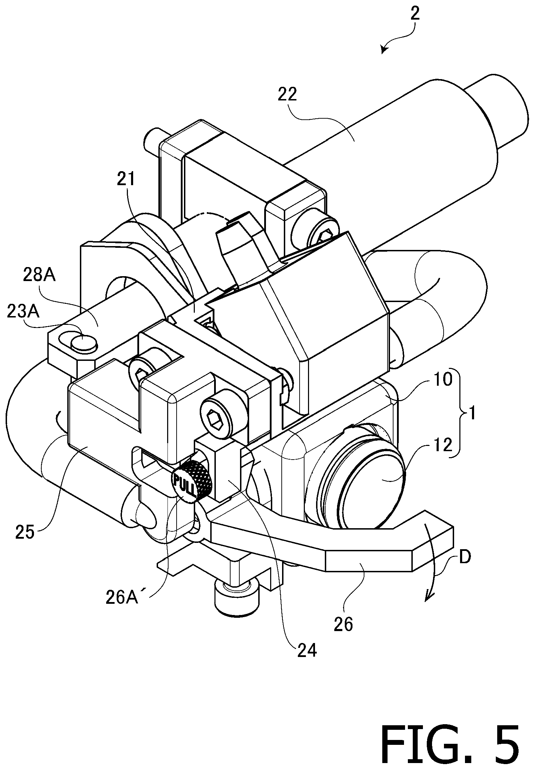

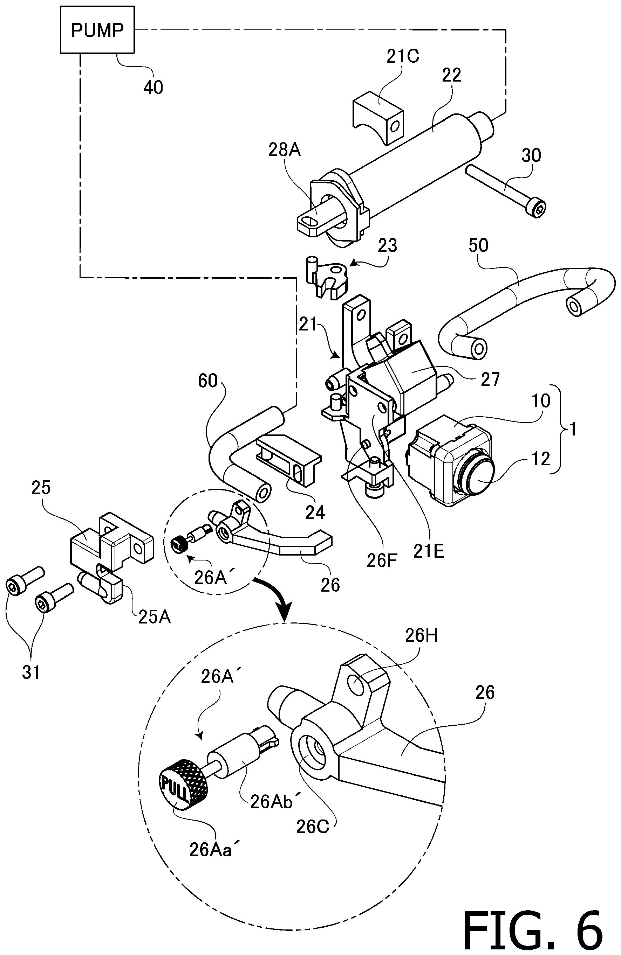

Fig. 5 shows a perspective view of a vehicle-mounted camera 1 and a cleaning device 2 according to a variation of the above-described embodiment. Fig. 6 shows an exploded perspective view of the vehicle-mounted camera 1 and the cleaning device 2 according to the present variation. In the above-described embodiment, the pin 26A to which the sliding movement of the link member 24 is transmitted the arm-shaped member 26 is formed integrally with the arm-shaped member 26. In contrast, in the present variation, the arm-shaped member 26 has a detachably attached release pin 26A' in place of the pin 26A. More specifically, the arm-shaped member 26 according to the present variation is supported by the support body 21 and has the detachably attached release pin 26A', and is configured to rotate about the short shaft part 21F of the support body 21 and the short shaft part 25A of the holding member 25 disposed coaxially with the short shaft part 21F in the direction of the arrow D (Fig. 5) as the motion of the piston 28 is transmitted to the release pin 26A' via the rod 28A, the cam member 23 and the link member 24.

The cleaning device 2 according to the present variation has substantially the same configuration as the cleaning device 2 according to the above-described embodiment apart from the arm-shaped member 26 having the release pin 26A and the holding member 25 having an escape shape for escaping from the release pin 26A'. In the present variation, in order to avoid duplication of the description made for the above-described embodiment, descriptions other than those related to the release pin 26A' will be herein simplified or omitted accordingly.

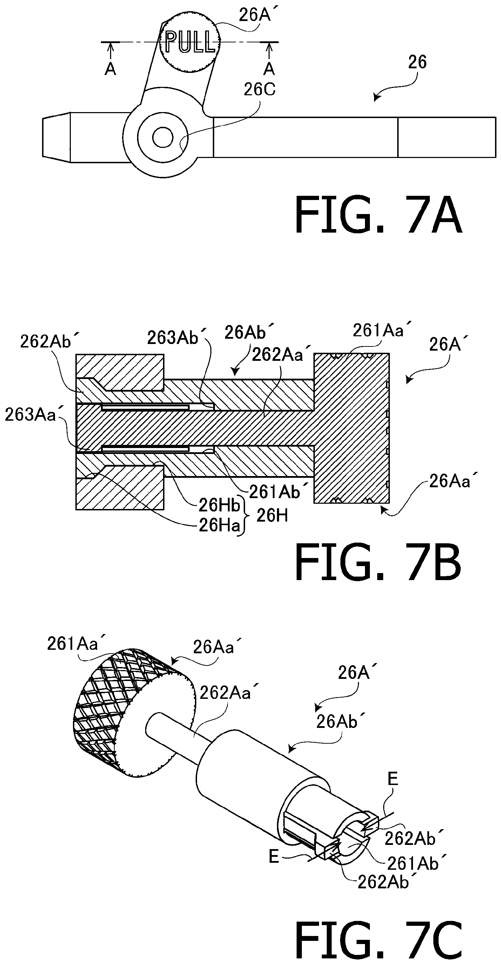

Fig. 7A is a side view of the arm-shaped member 26 according to the present variation. Fig. 7A is a cross-sectional view of the arm-shaped member cut at a line A-A shown in Fig. 7A. As shown in Fig. 7B, the release pin 26A' has a pin main body part 26Aa' and a lock part 26Ab'. Fig. 7C shows a perspective view of the release pin 26A' when viewed from the lock part 26Ab' side.

The pin main body part 26Aa' has a disk-shaped head part 261Aa' and a shaft part 262Aa' extending upright from the center of the head part 261Aa'.

The lock part 26Ab' is a cylindrical member having a hollow part 261Ab' and a pair of hook parts 262Ab' is formed on an outer periphery. The shaft part 262Aa' of the pin main body part 26Aa' is inserted in the hollow part 261Ab'. As shown in Fig. 7C, slits are formed on both sides of the hook part 262Ab' so that a portion of the hook part 262Ab' can elastically deform and the hook part 262Ab' can move in a direction in which the hook part 262Ab' gets close to a central axis of the rock part 26Ab' (in a direction of an arrow E) when an external force acts on the hook part 262Ab'.

An engagement hole 26H is formed to the arm-shaped member 26. The engagement hole 26H has a large-diameter part 26Ha and a small-diameter part 26Hb having an inner diameter smaller than that of the large-diameter part 26Ha. A portion between the large-diameter part 26Ha and the small-diameter part 26Hb is formed in a mortar-shape and an inner diameter thereof gradually gets smaller from the large-diameter part 26Ha toward the small-diameter part 26Hb.

The release pin 26A' (the pin main body part 26Aa' and the lock part 26Ab') becomes attached to the arm-shaped member 26 as the hook parts 262Ab' engage with the large-diameter part 26Ha of the engagement hole 26H (See Fig. 7B.).

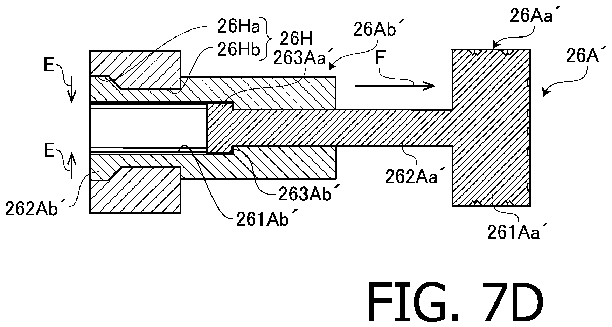

A disk-shaped flange part 263Aa' is formed at a lower end of the shaft part 262Aa' of the pin main body part 26Aa'. As the pin main body part 26Aa' is pulled, from the state in which the release pin 26A is attached to the arm-shaped member 26, in a direction of an arrow F with respect to the lock part 26Ab' as shown in Fig. 7D, the flange part 263Aa' abuts a step surface 263Ab' formed inside the hollow part 261Ab'. Therefore, the pin main body part 26Aa' does not come off the lock part 26Ab'.

As shown in Fig. 7D, when the pin main body part 26Aa' is pulled in the direction of the arrow F with respect to the lock part 26Ab', since there is no shaft part 262Aa' of the pin main body part 26Aa' in a space inside the hook parts 262Ab', a portion of the hook parts 262Ab' can elastically deform and the hook part 262Ab' can move in a direction in which the hook part 262Ab' gets close to the central axis of the rock part 26Ab' (in the direction of the arrow E) when an external force acts on the hook part 262Ab'. Therefore, as the lock part 26Ab' is pulled, from the state shown in Fig. 7D, in the direction of the arrow F with respect to the engagement hole 26H of the arm-shaped member 26, the hook parts 262Ab' moves to the small-diameter part 26Hb while being gradually pushed in the direction of the arrow E at the mortar-shape part between the large-diameter part 26Ha and the small-diameter part 26Hb and are pulled out of the engagement hole 26H through the small-diameter part 26Hb. That is, the entire release pin 26A' including the hook parts 262Ab' are pulled out of the engagement hole 26H.

When the release pin 26A' is pulled out of the engagement hole 26H, the arm-shaped member 26 is only supported between the side surface 21E and the holding member 25 by the short shaft part 21F formed to the side surface 21E of the support body 21 and the short shaft part 25A formed to the holding member 25. Therefore, the arm-shaped member 26 can be removed from the support body 21 and the holding member 25 only by slightly pushing out the space between the side surface 21E and the holding member 25.

## Claims

1. A cleaning device configured to clean a lens of a camera, the cleaning device comprising:
a piping;
a member having a flow path connected to the piping and a discharge outlet configured to discharge fluid flowed from the piping into the flow path toward the lens; and
a drive part configured to change a position on the lens where the fluid is sprayed by moving the member with respect to the lens with the discharge outlet facing the lens while the fluid is discharged from the discharge outlet.

2. The cleaning device according to claim 1,
wherein the member is disposed outside of an angle of view of the camera, and
wherein the drive part causes the member to move from outside of the angle of view to inside of the angle of view of the camera and causes the member to move within the angle of view with the discharge outlet facing the lens while the fluid is discharged from the discharge outlet.

3. The cleaning device according to claim 2,
wherein the member:
is an arm-shaped member to which the discharge outlet is provided at a distal end, and
is supported to be rotatable about a support at a base end portion of the arm-shaped member with respect to the camera,
wherein the drive part causes the member to rotate about the support while the fluid is discharged from the discharge outlet, and
wherein the member moves from outside of the angle of view to inside of the angle of view and moves within the angle of view while maintaining a posture in which the discharge outlet is facing the lens by rotating about the support.

4. The cleaning device according to claim 3,
wherein the drive part has:
a cylinder;
a piston configured to move within the cylinder; and
a transmission part configured to transmit motion of the piston to the member,
wherein the member rotates about the support by the motion transmitted by the transmission part.

5. The cleaning device according to claim 4,
wherein the member:
is supported by a support body supporting the camera,
has a detachably attached pin,
rotates about the support as the motion is transmitted to the pin via the transmission part, and
becomes detachable from the support body by detaching the pin.

6. The cleaning device according to claim 4,
wherein the flow path of the member includes:
a compressed air flow path connected to a first piping configured to supply compressed air; and
a cleaning liquid flow path connected to a second piping configured to supply cleaning liquid,
wherein an outlet of the compressed air flow path and an outlet of the cleaning liquid flow path are disposed close to each other near the discharge outlet such that the cleaning liquid is sucked out from the outlet of the cleaning liquid flow path and discharged from the discharge outlet along with the compressed air by generating negative pressure around the outlet of the compressed air flow path by the compressed air sprayed from the outlet of the compressed air flow path.

7. The cleaning device according to claim 6,
comprising a pump configured to supply the compressed air to both the cylinder and the first piping,
wherein, as the compressed air is supplied to both the cylinder and the first piping by the pump, the piston moves due to the compressed air supplied to the cylinder, the member rotates about the support due to the transmission of the motion to the member by the transmission part, and, during the rotation of the member, the compressed air supplied from the first piping to the compressed air flow path is sprayed from the outlet of the compressed air flow path and the cleaning liquid is discharged from the discharge outlet along with the compressed air.

8. The cleaning device according to claim 3,
wherein a communication port of the member configured to make the piping and the flow path communicate with each other is disposed coaxially with the support.

9. The cleaning device according to claim 6,
wherein, among a communication port configured to make the first piping and the compressed air flow path communicate with each other and a communication port configured to make the second piping and the cleaning liquid flow path communicate with each other, the former communication port is disposed coaxially with the support.
